# EUROPEAN PATENT SPECIFICATION

(11) **EP 3 357 982 B1**
(45) Date of publication and mention of the grant of the patent: **23.02.2022**
(21) Application number: 18151078.5
(22) Date of filing: 10.01.2018
(51) Int. Cl.: C09D 11/36, C09D 11/38

(54) **OILY INK COMPOSITION FOR INKJET RECORDING**
ÖLIGE TINTENZUSAMMENSETZUNG ZUR TINTENSTRAHLAUFZEICHNUNG
COMPOSITION D'ENCRE HUILEUSE POUR ENREGISTREMENT PAR JET D'ENCRE

(30) Priority: 01.02.2017 JP 2017016771
(43) Date of publication of application: 08.08.2018
(73) Proprietor: Seiko Epson Corporation, Tokyo 160-8801 (JP)
(72) Inventor: WAKABAYASHI, Shigemi, Suwa-shi, Nagano 392-8502 (JP)
(74) Representative: Miller Sturt Kenyon

(56) References cited:
- EP-A1- 2 230 283
- JP-A- 2010 095 583
- US-A1- 2017 121 546

## Description

### BACKGROUND

### 1. Technical Field

The present invention relates to an oily ink composition for ink jet recording.

### 2. Related Art

Ink jet printers for office use are being developed. For a printer for office use, it is required that high image quality is obtained by high-speed printing on a recording medium such as plain paper and finishing including bookbinding after printing is possible. Therefore, for an ink composition for ink jet recording (hereinafter also simply referred to as "ink") that is for use in the printer, it is required that high printing density can be ensured on plain paper at high speed, strike-through is suppressed for the purpose of enabling duplex printing, and paper deformations such as cockling and curling do not occur after high-speed printing. When ink used is an aqueous ink containing an aqueous medium, paper deformations such as cockling and curling occur after high-speed printing on plain paper in some cases. Therefore, oily ink compositions for ink jet recording that are unlikely to cause paper deformation and that contain an oily medium are also being developed.

In the case of using volatile organic compounds (VOCs) in oily ink compositions for ink jet recording as oily media, the VOCs may possibly be released in the environment to cause odors; hence, low-volatility organic compounds are used (refer to, for example, JP-A-2012-12432 and JP-A-2013-177597). An example of an oily ultraviolet curable ink is described in JP 2010-095583, a further example of an oily ink is described in EP 2 230 283.

Printing with an oily ink composition for ink jet recording that contains low-volatility organic compounds used as media reduces the amounts of generated VOCs. However, since the media have low volatility, in the case of printing on a permeable recording medium such as plain paper, the media deeply permeate the permeable recording medium to cause an extreme reduction in printing density (color developability) in an initial period of printing or ink reaches the back surface of plain paper to cause strike-through or bleeding and, in the case of duplex printing, no proper print is obtained because an image on the back surface is seen through. As described above, in an ink containing a low-volatility organic compound used as a medium, there is a problem in that high-image quality, high-speed printing or duplex printing cannot be performed because the reduction in color developability of prints or the increase of strike-through occurs to cause a reduction in image quality.

### SUMMARY

An advantage of some aspects of the invention solves or reduces at least one portion of the above problem and provides an oily ink composition for ink jet recording that can reduce the amounts of generated VOCs in printing on permeable recording media, that can maintain the printing density in an initial period of printing to suppress the reduction of color developability and the increase of strike-through, and that enables both high image quality and high-speed recording.

The invention has been made for the purpose of solving at least one portion of the above problem and can be implemented as an aspect or application below.

### Application 1

An oily ink composition for ink jet recording according to an aspect of the invention contains an oily medium and a colorant. The oily medium contains an allyl ether selected from triethylene glycol allyl methyl ether and diethylene glycol allyl butyl ether or represented by the following formula: 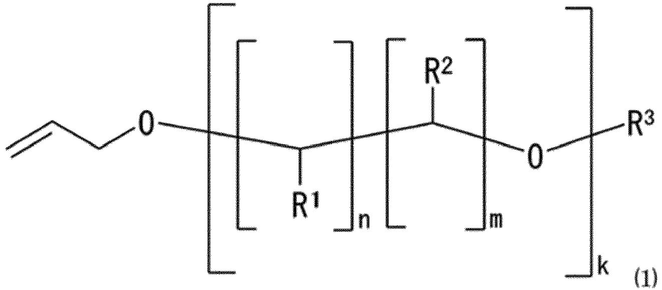 where R¹ and R² independently represent a hydrogen atom or a methyl group, R³ represents a hydrogen atom or an allyl group, k represents an integer of 1 to 4, and m and n each represent an integer satisfying the inequality m + n ≤ 3. The oily medium further contains an aliphatic alcohol containing 12 or more carbon atoms in one molecule.

According to the above application, since the oily medium contains the allyl ether, which is represented by Formula (1), and the allyl ether contains an unsaturated hydrocarbon group attached to an end of a molecule thereof, the permeability of ink in a permeable recording medium such as plain paper is suppressed. Therefore, the oily ink composition for ink jet recording can be provided such that the oily ink composition for ink jet recording can maintain the printing density in an initial period of printing to suppress the reduction of color developability of prints on permeable recording media such as plain paper, can suppress the strike-through of ink, can reduce the amounts of generated VOCs, and enables both high image quality and high-speed recording.

### Application 2

In the above application, the content of the allyl ether in the oily medium may be 30% by mass or more.

According to the above application, when the content of the allyl ether in the oily medium is 30% by mass or more, the reduction in color developability of prints can be suppressed in printing on permeable recording media.

### Application 3

In the above application, the boiling point of an alkylene glycol for forming the allyl ether may be 240 °C or more.

According to the above application, when the boiling point of the alkylene glycol for forming the allyl ether is 240 °C or more, the amounts of VOCs generated during printing can be significantly reduced and high-speed massive printing can be safely performed without any ventilation system.

### Application 4

In the above application, the alkylene glycol may include at least one selected from the group consisting of diethylene glycol, triethylene glycol, and tetraethylene glycol.

According to the above application, when the alkylene glycol is any of diethylene glycol, triethylene glycol, and tetraethylene glycol, ink which has low viscosity and which reduces the amounts of generated VOCs can be achieved and stable ink jet recording can be performed. Application 5

In the above application, the allyl ether may be a diallyl ether.

According to the above application, when the allyl ether is the diallyl ether, the viscosity of ink can be suppressed to a low level and the reduction in color developability of prints can be suppressed in an initial period of printing on permeable recording media such as plain paper. Application 6

In the above application, the colorant may be a pigment.

According to the above application, when the colorant is the pigment, the occurrence of bleeding is suppressed and image quality is increased.

### Application 7

In the above application, the oily medium may contain a polar organic solvent.

According to the above application, when the oily medium contains the polar organic solvent, the reduction in color developability of prints can be suppressed in an initial period of printing on permeable recording media such as plain paper.

### Application 8

In the above application, at least one of a metal complex and a fatty acid metal salt may be further contained.

According to the above application, the metal complex or the fatty acid metal salt acts as an oxidizer promoting the oxidative polymerization of an organic compound contained in the oily medium. Therefore, the curing of ink is promoted after printing and the oily medium is quickly fixed in a recording medium. This enables the reduction in color developability of prints and strike-through to be suppressed in printing on permeable recording media such as plain paper, thereby enabling high-image quality duplex printing to be performed.

### DESCRIPTION OF EXEMPLARY EMBODIMENTS

Preferred embodiments of the invention are described below. An embodiment below is one for describing an example of the invention.

### 1. Oily ink composition for ink jet recording

An oily ink composition for ink jet recording according to an embodiment of the invention contains an oily medium and a colorant. The oily medium contains an allyl ether represented by the following formula: 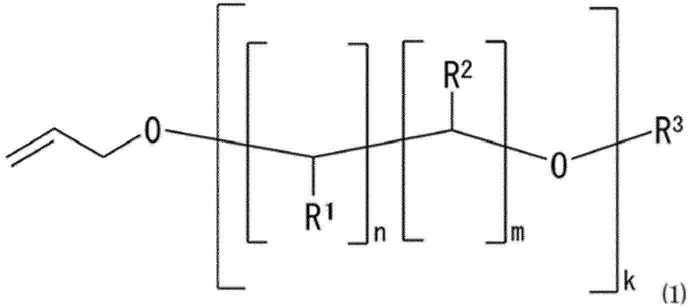 where R¹ and R² independently represent a hydrogen atom or a methyl group, R³ represents a hydrogen atom or an allyl group, k represents an integer of 1 to 4, and m and n each represent an integer satisfying the inequality m + n ≤ 3.

The term "oily ink composition for ink jet recording", as used herein, refers to a composition in which an oily medium is a major solvent (medium) component and in which water is not any major component. The content of water in the composition is 5% by mass or less, preferably 3% by mass or less, more preferably 2% by mass or less, further more preferably 1% by mass or less, and particularly preferably 0.5% by mass or less. The content of the oily medium in the composition is preferably 50% by mass or more, more preferably 70% by mass or more, more preferably 80% by mass or more, and particularly preferably 90% by mass or more. In the case where water is not intentionally used as a main component to prepare the composition, which is not limited, but is inevitably contained in the form of an impurity, the composition is allowable.

Components that are contained in the oily ink composition for ink jet recording (hereinafter also simply referred to as the "ink") and components that may be contained therein are described below.

### 1.1. Colorant

The oily ink composition for ink jet recording contains the colorant. The colorant used may be an oily dye usually used in known oily ink compositions for ink jet recording or a pigment such as a colored inorganic pigment or a colored organic pigment. The oily dye and the pigment may be used alone or in combination.

### 1.1.1. Pigment

In this embodiment, when the colorant used is the pigment, the pigment is not particularly limited and a dispersion of the pigment in the ink may have an average particle diameter of 20 nm to 200 nm and a hue such as black, yellow, magenta, cyan, red, green, blue, or orange. Known inorganic and organic pigments can be used. When the colorant used is the pigment, the lightfastness and water resistance of a print are good. When the colorant used is the pigment, the occurrence of bleeding is suppressed and image quality is increased.

Examples of the pigment include azo pigments such as azo lakes, insoluble azo pigments, condensed azo pigments, and chelate azo pigments; polycyclic pigments such as phthalocyanine pigments, perylene, perylene pigments, anthraquinone pigments, quinacridone pigments, dioxazine pigments, thioindigo pigments, isoindolinone pigments, and quinophthalone pigments; dye lakes such as basic dye lakes and acidic dye lakes; organic pigments such as nitro pigments, nitroso pigments, aniline black, and daylight fluorescent pigments; and inorganic pigments such as carbon black.

In particular, when the oily ink composition for ink jet recording serves as a magenta or red ink, examples of the pigment include C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 48:1, C.I. Pigment Red 53:1, C.I. Pigment Red 57:1, C.I. Pigment Red 122, C.I. Pigment Red 123, C.I. Pigment Red 139, C.I. Pigment Red 144, C.I. Pigment Red 149, C.I. Pigment Red 166, C.I. Pigment Red 170, C.I. Pigment Red 177, C.I. Pigment Red 178, C.I. Pigment Red 194, C.I. Pigment Red 209, C.I. Pigment Red 222, C.I. Pigment Red 224, and C.I. Pigment Violet 19.

When the oily ink composition for ink jet recording serves as an orange or yellow ink, examples of the pigment include C.I. Pigment Orange 31, C.I. Pigment Orange 43, C.I. Pigment Orange 64, C.I. Pigment Yellow 12, C.I. Pigment Yellow 13, C.I. Pigment Yellow 14, C.I. Pigment Yellow 15, C.I. Pigment Yellow 17, C.I. Pigment Yellow 74, C.I. Pigment Yellow 93, C.I. Pigment Yellow 94, C.I. Pigment Yellow 128, C.I. Pigment Yellow 138, C.I. Pigment Yellow 150, and C.I. Pigment Yellow 180.

When the oily ink composition for ink jet recording serves as a green or cyan ink, examples of the pigment include C.I. Pigment Blue 15, C.I. Pigment Blue 15:2, C.I. Pigment Blue 15:3, C.I. Pigment Blue 15:4, C.I. Pigment Blue 16, C.I. Pigment Blue 60, C.I. Pigment Green 7, and C.I. Pigment Green 36.

When the oily ink composition for ink jet recording serves as a black ink, an example of the pigment is carbon black.

When the oily ink composition for ink jet recording serves as a white ink, examples of the pigment include C.I. Pigment White 6, C.I. Pigment White 18, and C.I. Pigment White 21.

Examples of commercially available black pigments include pigments, such as Carbon Black MA 11, Carbon Black MA 100, Carbon Black MA 220, Carbon Black MA 600a, Carbon Black #40, and Carbon Black #44, available from Mitsubishi Chemical Corporation. Examples of pigments other than the black pigments include pigments, such as Symuler Brilliant Carmine 6B, Symuler Red, FASTOGEN Super Magenta, Symuler Fast Yellow, FASTOGEN Blue 4RO-2, FASTOGEN Green, and FASTOGEN Super Violet, available from DIC Corporation. These pigments may be used alone or in combination.

The content of the pigment in the oily ink composition for ink jet recording may be appropriately selected depending on applications or printing properties. The content of the pigment therein preferably ranges from 0.01% by mass to 20% by mass with respect to the mass (100% by mass) of the ink, more preferably 0.5% by mass to 15% by mass, and particularly preferably 1% by mass to 10% by mass because the color developability of prints is high and high image quality is obtained.

The average particle diameter of the pigment is preferably 20 nm to 200 nm as described above. When the average particle diameter thereof is 20 nm or more, color developability is good, which is appropriate for the ink. When the average particle diameter thereof is 200 nm or less, the pigment is readily used in an ink jet process. The average particle diameter thereof is more preferably 50 nm to 150 nm because the storage stability, ejection stability, and sedimentation of the ink are excellent.

The term "average particle diameter", as used herein, refers to the sphere-equivalent 50% average particle diameter (d50) determined for the ink by a light scattering method. The "sphere-equivalent 50% average particle diameter (d50) determined by a light scattering method" is a value determined as described below. Light is applied to particles in the oily medium and diffracted/scattered light thereby generated is measured with detectors placed at the front, sides, and rear of the oily medium. The particles, which are originally irregular, are supposed to be spherical, a cumulative curve is determined on the basis that the volume of a group of particles converted into spheres equal in volume to the particles using the measurements is 100%, and a point corresponding to a cumulative value of 50% in the cumulative curve is set to the 50% average particle diameter (d50).

When the colorant used is the pigment, an arbitrary dispersant for use in usual oily ink compositions for ink jet recording may be contained in the oily ink composition for ink jet recording from the viewpoint of enhancing the dispersion stability of the pigment in the oily ink composition for ink jet recording. The dispersant is not particularly limited and may stably disperse the pigment in a solvent. Examples of the dispersant include dispersants, such as Solsperse 5000, Solsperse 13940, Solsperse 11200, Solsperse 21000, and Solsperse 28000, available from Japan Lubrizol Corporation.

The content of the dispersant in the oily ink composition for ink jet recording may be appropriately selected depending on the pigment to be dispersed. The amount of the dispersant contained therein is preferably, for example, 5 parts by mass to 200 parts by mass with respect to 100 parts by mass of the pigment in the oily ink composition for ink jet recording and more preferably 30 parts by mass to 120 parts by mass.

### 1.1.2. Dye

In this embodiment, when the colorant used is a dye, examples of a commercially available black dye include dyes, such as VALIFAST Black 3810, ELIXA Black 846, OIL BLACK HBB, and OIL BLACK No. 5, available from Orient Chemical Industries Co., Ltd. Examples of a dye other than the black dye include OIL BLUE 2N, ELlXA Orange-240, VALIFAST Blue 1603, ELlXA Green-502, VALIFAST Orange 1201, OIL GREEN 530, ELIXA Green-540, OIL YELLOW GG-S, ELlXA Green-129, and VALIFAST Orange 1201. These dyes can be used alone or in combination. When the colorant used is the dye, the storage stability of the ink is high and the ejection of the ink during printing is stable.

The content of the dye in the oily ink composition for ink jet recording may be appropriately selected depending on applications or printing properties. The content of the dye therein preferably ranges from 0.01% by mass to 20% by mass with respect to the mass (100% by mass) of the ink, more preferably 0.5% by mass to 15% by mass, and particularly preferably 1% by mass to 10% by mass because the color developability of prints is high and high image quality is obtained.

### 1.2. Oily medium

**The** oily ink composition for ink jet recording contains the oily medium. The term "oily medium", as used herein, includes liquid media, containing organic solvents, for dispersing colorants such as pigments and refers to a medium that is liquid at room temperature and atmospheric pressure. When the oily medium is an organic solvent-containing material containing an organic solvent and a mixture excluding the organic solvent, the content of the organic solvent therein is more than 5% by mass. The oily medium, which is contained in the oily ink composition for ink jet recording, is further described below in detail.

### 1.2.1. Allyl ether represented by Formula (1)

In the oily ink composition for ink jet recording, the oily medium contains the allyl ether, which is represented by the following formula: 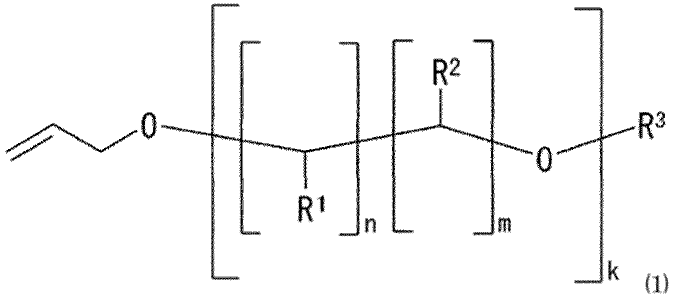 where R¹ and R² independently represent a hydrogen atom or a methyl group, R³ represents a hydrogen atom or an allyl group, k represents an integer of 1 to 4, and m and n each represent an integer satisfying the inequality m + n ≤ 3.

In Formula (1), the allyl group is -CH₂CHCH₂.

The allyl ether, which is represented by Formula (1), contains the allyl group, which is an unsaturated hydrocarbon group and is attached to an end of a molecule thereof, and therefore has high reactivity. In the oily ink composition for ink jet recording, the oily medium contains the allyl ether, which is represented by Formula (1). Therefore, in the case of printing on a permeable recording medium such as plain paper, the ink, which has low viscosity before recording (printing), is quickly cured after recording to have high viscosity and the oily medium, which is contained in the ink, is fixed in the permeable recording medium. This allows the oily ink composition for ink jet recording to suppress the paper permeability of the ink, to maintain the printing density in an initial period of printing on permeable recording media such as plain paper, to suppress the strike-through of the ink, to reduce the amounts of generated VOCs, and to enable both high image quality and high-speed recording.

Furthermore, since the oily medium contains the allyl ether, which is represented by Formula (1), the oily medium, which is contained in the ink, is fixed in recording media. Therefore, even if a print is put in a clear holder, the transfer of the oily medium to the clear holder is suppressed, leading to the enhancement of clear holder storage properties.

Examples of an alkylene glycol for forming the allyl ether, which is represented by Formula (1), include methylene glycol, ethylene glycol, and linear or branched propylene glycol when k is 1.

In Formula (1), R¹ and R² independently represent a hydrogen atom or a methyl group, R³ represents a hydrogen atom or an allyl group, k represents an integer of 1 to 4, and m and n each represent an integer satisfying the inequality m + n ≤ 3, that is, m and n each represent 0, 1, 2, or 3. Therefore, examples of the alkylene glycol for forming the allyl ether, which is represented by Formula (1), include dimethylene glycol, diethylene glycol, linear or branched dipropylene glycol, trimethylene glycol, triethylene glycol, linear or branched tripropylene glycol, tetramethylene glycol, tetraethylene glycol, and linear or branched tetrapropylene glycol when k is 2, 3, or 4.

Thus, examples of the allyl ether, which is represented by Formula (1), include diethylene glycol diallyl ether, triethylene glycol diallyl ether, tetraethylene glycol diallyl ether, triethylene glycol allyl methyl ether, diethylene glycol allyl butyl ether, tetraethylene glycol monoallyl ether, ethylene glycol diallyl ether, and dipropylene glycol diallyl ether.

Among these allyl ethers, the allyl ether, which is represented by Formula (1), is preferably a diallyl ether. When the allyl ether, which is represented by Formula (1), is the diallyl ether, the viscosity of the ink can be suppressed to a low level and the printing density in an initial period of printing can be maintained in printing on permeable recording media such as plain paper.

**The** alkylene glycol for forming the allyl ether, which is represented by Formula (1), preferably includes at least one selected from the group consisting of diethylene glycol, triethylene glycol, and tetraethylene glycol. When the alkylene glycol is any of diethylene glycol, triethylene glycol, and tetraethylene glycol, ink which has low viscosity and which reduces the amounts of generated VOCs can be achieved and stable ink jet recording can be performed.

The boiling point of the alkylene glycol for forming the allyl ether, which is represented by Formula (1), is preferably 240 °C or more. In this case, the amount of VOCs generated during printing can be significantly reduced and high-speed massive printing can be safely performed without any ventilation system.

Examples of the alkylene glycol include diethylene glycol (a boiling point of 244 °C), triethylene glycol (a boiling point of 285 °C), and tetraethylene glycol (a boiling point of 328 °C).

The content of the allyl ether in the oily medium is preferably 30% by mass or more, more preferably 40% by mass or more, and further more preferably 50% by mass or more. When the content of the allyl ether in the oily medium is 30% by mass or more, the printing density in an initial period of printing can be maintained in printing on a permeable recording medium.

From the viewpoint of ejection stability and the color developability of an obtained image, the upper limit of the content of the oily medium in the oily ink composition for ink jet recording is preferably 90% by mass or less and more preferably 85% by mass or less.

### 1.2.2. Another oily medium

The oily ink composition for ink jet recording may contain another oily medium other than the allyl ether. The other oily medium used may be, for example, any of various known vegetable oils and/or petroleum solvents or may be any of non-polar and polar organic solvents. 1.2.2.1. Non-polar organic solvent

Examples of a non-polar organic solvent for use in the oily ink composition for ink jet recording include hydrocarbon solvents that are petroleum solvents, fluorinated solvents, and silicon solvents. Examples of the hydrocarbon solvents include aliphatic hydrocarbon solvents, alicyclic hydrocarbon solvents, and aromatic hydrocarbon solvents. The aliphatic and alicyclic hydrocarbon solvents used may be commercially available products. Examples of the aliphatic and alicyclic hydrocarbon solvents include solvents such as TECLEAN N-16, TECLEAN N-20, TECLEAN N-22, Nisseki Naphtesol L, Nisseki Naphtesol M, Nisseki Naphtesol H, #0 Solvent L, #0 Solvent M, #0 Solvent H, Nisseki Isosol 300, Nisseki Isosol 400, AF-4, AF-5, AF-6, and AF-7, available from Nippon Oil Corporation and solvents such as Isopar G, Isopar H, Isopar L, Isopar M, Exxsol D40, Exxsol D80, Exxsol D100, Exxsol D130, and Exxsol D140, available from Exxon Mobil Corporation. Examples of the aromatic hydrocarbon solvents include a solvent such as Nisseki Cleansol G (alkylbenzene), available from Nippon Oil Corporation and a solvent such as Solvesso 200, available from Exxon Mobil Corporation.

### 1.2.2.2. Polar organic solvent

Examples of a polar organic solvent for use in the oily ink composition for ink jet recording include ester solvents, alcohol solvents, amide solvents, fatty acid solvents, and ether solvents. In this embodiment, when the oily medium contains the polar organic solvent, the curing of the ink is promoted after printing, the oily medium is quickly fixed in a recording medium, and the reduction in color developability of prints and strike-through can be suppressed. According to the invention, the oily medium of the oily ink composition for ink jet recording contains an aliphatic alcohol containing 12 or more carbon atoms in one molecule.

The ester solvents are preferably higher fatty acid esters containing five or more carbon atoms in one molecule, more preferably nine or more carbon atoms, and further more preferably 12 to 32 carbon atoms. Examples of the ester solvents include isodecyl isononanoate, isotridecyl isononanoate, isononyl isononanoate, methyl laurate, isopropyl laurate, isopropyl myristate, isopropyl palmitate, isooctyl palmitate, hexyl palmitate, isostearyl palmitate, isooctyl isopalmitate, methyl oleate, ethyl oleate, isopropyl oleate, butyl oleate, hexyl oleate, methyl linoleate, isobutyl linoleate, ethyl linoleate, butyl stearate, hexyl stearate, isooctyl stearate, isopropyl stearate, 2-octyldodecyl pivalate, diisopropyl adipate, diisopropyl sebacate, diethyl sebacate, propylene glycol monocaprylate, trimethylolpropane tri(2-ethylhexanoate), and glyceryl tri(2-ethylhexanoate). Furthermore, examples of the higher fatty acid esters include soybean oil fatty acid methyl esters, soybean oil fatty acid isobutyl esters, linseed oil fatty acid methyl esters, linseed oil fatty acid butyl esters, linseed oil fatty acid propyl esters, linseed oil fatty acid 2-ethylhexyl esters, wood oil fatty acid methyl esters, tall oil fatty acid methyl esters, and tall oil fatty acid isobutyl esters that are esters of drying oil fatty acids with alcohols as described below.

Examples of cyclic esters include β-propiolactone, β-butyrolactone, γ-butyrolactone, γ-valerolactone, γ-caprolactone, σ-caprolactone, and ε-caprolactone.

Examples of the alcohol solvents include methyl alcohol, ethyl alcohol, propyl alcohol, butyl alcohol, isopropyl alcohol, and fluorinated alcohols. In particular, the alcohol solvents are preferably higher aliphatic alcohols containing 12 or more carbon atoms in one molecule. Examples of the higher aliphatic alcohols include higher alcohols such as hexyldecanol, hexadecanol, isomyristyl alcohol, isopalmityl alcohol, stearyl alcohol, and oleyl alcohol.

Examples of polyalcohols include ethylene glycol, diethylene glycol, triethylene glycol, polyethylene glycol, polypropylene glycol, propylene glycol, butylene glycol, 1,2,6-hexanetriol, thioglycol, hexylene glycol, glycerin, trimethylolethane, and trimethylolpropane.

Examples of the amide solvents include acetamide, N,N-dimethylacetamide, and N-methylpyrrolidinone.

The fatty acid solvents are preferably fatty acids containing four or more carbon atoms in one molecule and more preferably nine to 22 carbon atoms. Examples of the fatty acid solvents include isononanoic acid, isomyristic acid, hexadecanoic acid, isopalmitic acid, oleic acid, and isostearic acid.

Examples of the ether solvents include glycol ethers such as diethylene glycol monobutyl ether, ethylene glycol monobutyl ether, propylene glycol monobutyl ether, and propylene glycol dibutyl ether and acetates of the glycol ethers.

Examples of ketone solvents include acetone, methyl ethyl ketone, and cyclohexanone.

Amines may be contained. Examples of the amines include hydroxylamines such as triethanolamine, tripropanolamine, tributanolamine, N,N-dimethyl-2-aminoethanol, and N,N-diethyl-2-aminoethanol.

### 1.2.2.3. Ester of drying oil fatty acid with alcohol

An ester of a drying oil fatty acid with alcohol has low viscosity. Even if a large amount of the ester is used in the oily ink composition for ink jet recording, a problem with ejection does not occur. The ester contains many double bonds and therefore the oxidative polymerization of the ink is promoted. Therefore, when the oily medium contains the ester, the ink, which has low viscosity before recording, is quickly cured after printing to have high viscosity and the oily medium, which is contained in the ink, is fixed in a recording medium. This allows the oily ink composition for ink jet recording to be provided such that the oily ink composition for ink jet recording can suppress the paper permeability of the ink, can maintain the printing density in an initial period of printing on permeable recording media such as plain paper, can suppress the strike-through of the ink, can reduce the amounts of generated VOCs, and enables both high image quality and high-speed recording.

**The** ester has low attack properties on clear holders. Therefore, even if an obtained print is put in a clear holder, the transfer of the oily medium to the clear holder is suppressed. Hence, the oily ink composition for ink jet recording can be provided so as to have enhanced clear holder storage properties.

**The** ester can be used without any limitations. The drying oil fatty acid, which is a raw material for producing the ester, is one obtained by hydrolyzing a drying oil. Examples of the drying oil include linseed oil, wood oil, mustard oil, beefsteak plant oil, walnut oil, perilla oil, safflower oil, and sunflower oil as described below. The drying oil can be produced by a known hydrolysis process.

The alcohol, which is a raw material for producing the ester, may be an unsaturated alcohol and can be used without limitations on the number of carbon atoms. There is a possibility that the ester is immediately hydrolyzed on a recording medium after recording and the alcohol transfers to a clear holder. When the number of carbon atoms in the alcohol is three or less, the alcohol is likely to evaporate. Even if the alcohol remaining in a print transfers to a clear holder to deform the clear holder, the clear holder tends to return a former state thereof. However, it is preferable that the oxidative polymerization of the ink is completed before the transfer of the alcohol and the alcohol does not transfer to the clear holder. Therefore, curing is preferably promoted using a metal complex and fatty acid metal salt below in combination.

In contrast, when the number of carbon atoms in the alcohol is four or more, the alcohol is unlikely to evaporate and therefore is likely to transfer to the clear holder. When the metal complex and the fatty acid metal salt are contained in the ink, the hydrolysis of the ester is promoted. Therefore, none of the metal complex and the fatty acid metal salt is preferably contained in the ink.

A method for producing the ester is not particularly limited and may be a known method. The ester can be produced by a method disclosed in, for example, JP-A-2005-53871, JP-A-2009-203343, or JP-A-2011-99009.

Examples of the ester include linseed oil fatty acid 2-ethylhexyl esters and linseed oil fatty acid methyl esters.

### 1.2.2.4. Drying oil

The oily ink composition for ink jet recording may contain a drying oil. The drying oil has high viscosity. Therefore, when a large amount of the drying oil is contained in the ink for ink jet recording, a problem with ejection occurs. The drying oil contains many double bonds and therefore the oxidative polymerization of the ink is promoted. Therefore, the ink is quickly cured after printing by adjunctively using the drying oil in the ink, whereby the oily medium, which is contained in the ink, is fixed in a permeable recording medium. This allows the oily ink composition for ink jet recording to be provided such that the oily ink composition for ink jet recording can suppress the paper permeability of the ink, can maintain the printing density in an initial period of printing on permeable recording media such as plain paper, can suppress the strike-through of the ink, can reduce the amounts of generated VOCs, and enables both high image quality and high-speed recording.

**The** drying oil has low attack properties on polypropylene (PP), which is a raw material for producing clear holders. The oily medium, which is contained in the ink, is fixed in a recording medium. Therefore, even if a print is put in a clear holder, the transfer of the oily medium to the clear holder is suppressed. Hence, the oily ink composition for ink jet recording can be provided such that clear holder storage properties of a print are enhanced.

The term "drying oil" refers to an oil with an iodine value of 130 or more. Examples of the drying oil include linseed oil, wood oil, mustard oil, beefsteak plant oil, walnut oil, perilla oil, safflower oil, and sunflower oil. These oils may be used alone or in combination.

When the oily ink composition for ink jet recording contains the drying oil, the content of the drying oil in the oily ink composition for ink jet recording is preferably 0.05% by mass to 10% by mass from the viewpoint of ejection properties of the ink.

### 1.3. Metal complex and/or fatty acid metal salt

The oily ink composition for ink jet recording preferably contains at least one of the metal complex and the fatty acid metal salt. The metal complex and the fatty acid metal salt are called driers (curing accelerators). In the oily ink composition for ink jet recording, the metal complex and the fatty acid metal salt act as oxidizers promoting the oxidative polymerization of an organic compound contained in the oily medium. Therefore, in the case of making a record on a recording medium such as paper using the oily ink composition for ink jet recording, the ink is quickly cured after recording and the oily medium, which is contained in the ink, is fixed in the recording medium. This enables the printing density in an initial period of printing to be maintained in printing on permeable recording media such as plain paper, strike-through to be suppressed, and high-image quality duplex printing to be performed.

In this embodiment, a metal contained in the metal complex or the fatty acid metal salt may be at least one selected from the group consisting of cobalt (Co), Manganese (Mn), lead (Pb), zirconium (Zr), calcium (Ca), barium (Ba), potassium (K), and iron (Fe). In this embodiment, the metal complex and the fatty acid metal salt are organic acid metal salts. Organic acids conventionally used as general raw materials for producing driers can be used as organic acids that are raw materials for producing the organic acid metal salts without any limitations. In particular, the following acids can be used: for example, organic acids such as propionic acid, octyl acid, naphthenic acid, neodecanoic acid, wood oil acid, linseed oil acid, soybean oil acid, and resin acid. From the viewpoint of obtaining an excellent drying promoting effect, an aliphatic monocarboxylic acid containing three to 12 carbon atoms is preferably used and octyl acid, naphthenic acid, or neodecanoic acid is more preferably used. These acids may be used alone or in combination.

Among the above metals, cobalt (Co), Manganese (Mn), or iron (Fe) is preferably used.

Before being added to the oily ink composition for ink jet recording, the metal complex and/or the fatty acid metal salt is preferably diluted with an organic solvent in advance from the viewpoint of handleability and homogeneous mixing. The organic solvent is not particularly limited, can dissolve the metal complex and/or the fatty acid metal salt, and may be inert to the metal complex and/or the fatty acid metal salt. Examples of the organic solvent include hydrocarbon solvents such as toluene, xylene, heptane, hexane, cyclohexane, and mineral spirits; alcohol solvents such as methanol, ethanol, propanol, and cyclohexanol; ketone solvents such as methyl ethyl ketone, methyl isobutyl ketone, and cyclohexanone; and ether solvents such as propyl ether, methyl cellosolve, cellosolve, butyl cellosolve, methyl carbitol, and butyl carbitol. These solvents may be used alone or in combination.

### 1.4. Other components

The oily ink composition for ink jet recording may further contain an additive contained in usual inks. Examples of the additive include stabilizing agents such as oxidation inhibitors and ultraviolet absorbers, surfactants, binder resins, or the like.

### Oxidation inhibitor

Examples of an oxidation inhibitor include 2,3-dibutyl-4-oxyanisole (BHA) and 2,6-di-t-butyl-p-cresol (BHT).

### Ultraviolet absorber

Examples of an ultraviolet absorber include benzophenone compounds and benzotriazole compounds.

### Binder resin

The oily ink composition for ink jet recording may further contain a binder resin for the purpose of fixing the pigment to recording media or adjusting the viscosity of the ink. Examples of the binder resin include acrylic resins, styrene-acrylic resins, rosin-modified resins, phenol resins, terpene resins, polyester resins, polyamide resins, epoxy resins, vinyl chloride-vinyl acetate copolymer resins, fibrous resins such as cellulose acetate butyrate, and vinyltoluene-α-methylstyrene copolymer resins. These resins may be used alone or in combination. When the oily ink composition for ink jet recording contains the binder resin, fixability to recording media can be increased and abrasion resistance is increased.

The content of the solid matter of the binder resin in the oily ink composition for ink jet recording is preferably 0.05% by mass to 15% by mass, more preferably 0.1% by mass to 10% by mass, and further more preferably 1% by mass to 5% by mass.

### Surfactant

The oily ink composition for ink jet recording may further contain a silicon surfactant, a fluorinated surfactant, or a polyoxyethylene derivative that is a nonionic surfactant from the viewpoint of reducing the surface tension to increase the wettability with recording media.

The silicon surfactant used is preferably polyester-modified silicone or polyether-modified silicone. Examples of the silicon surfactant include surfactants, such as BYK-315, BYK-315N, BYK-347, BYK-348, BYK-UV 3500, BYK-UV 3510, BYK-UV 3530, and BYK-UV 3570, available from Byk Chemie Japan K.K.

**The** fluorinated surfactant used is preferably a fluorine-modified polymer. Examples of the fluorinated surfactant include a surfactant, such as BYK-340, available from Byk Chemie Japan K.K.; surfactants, such as SURFLON S-211, SURFLON S-131, SURFLON S-132, SURFLON S-141, SURFLON S-144, and SURFLON S-145, available from Asahi Glass Co., Ltd.; surfactants, such as Ftergent 100, Ftergent 150, Ftergent 251, FT-250, and FT-251, available from NEOS Co., Ltd.; a surfactant, such as MEGAFACE F477, available from DIC Corporation; surfactants, such as FC-170C, FC-430, and Fluorad FC4430, available from Sumitomo 3M Limited; and surfactants, such as FSO, FSO-100, FSN, FSN-100, and FS-300, available from DuPont.

**The** polyoxyethylene derivative used is preferably an acetylene glycol surfactant. Examples of the polyoxyethylene derivative include surfactants, such as SURFYNOL 82, SURFYNOL 104, SURFYNOL 465, SURFYNOL 485, and SURFYNOL TG, available from Air Products, Japan, Inc.; surfactants, such as Olfine STG and Olfine E1010, available from Nissin Chemical Industry Co., Ltd.; surfactants, such as Nissan Nonion A-10R and Nissan Nonion A-13R, available from NOF Corporation; surfactants, such as FLOWLEN TG-740W and FLOWLEN D-90, available from Kyoeisha Chemical Co., Ltd.; and a surfactant, such as Noigen CX-100, available from Daiichi Kogyo Seiyaku Co., Ltd.

The content of a surfactant in the oily ink composition for ink jet recording is preferably 0.05% by mass to 3% by mass, more preferably 0.1% by mass to 2% by mass, and further more preferably 0.5% by mass to 1% by mass.

The oily ink composition for ink jet recording may further contain a pH adjustor; a chelating agent such as ethylenediaminetetraacetic acid (EDTA); and/or a substance, such as an antiseptic/antimildew agent or a rust preventive, for imparting predetermined performance. 1.5. Method for producing oily ink composition for ink jet recording

The oily ink composition for ink jet recording can be produced by a known method. When the colorant used is the pigment, the pigment, the dispersant, and a portion of the organic solvent are mixed into a pigment dispersion using a ball mill, a bead mill, an ultrasonic mill, a jet mill, or the like. The pigment dispersion is adjusted so as to have desired ink properties. Subsequently, the rest of the organic solvent and the additive(s) (for example, the surfactant or the binder resin) are added to the pigment dispersion under stirring, followed by centrifugal separation or filtration as required, whereby the oily ink composition for ink jet recording can be obtained.

### 1.6. Properties

The oily ink composition for ink jet recording preferably has a surface tension of 20 mN/m to 50 mN/m at 20 °C and more preferably 25 mN/m to 40 mN/m from the viewpoint of the balance between image quality and the reliability of the oily ink composition for ink jet recording. The surface tension can be measured using an automatic surface tensiometer, CBVP-Z, available from Kyowa Interface Science Co., Ltd. in such a manner that a platinum plate is wetted with the ink in a 20 °C environment.

From the same viewpoint as above, the oily ink composition for ink jet recording preferably has a viscosity of 2 mPa·s to 30 mPa·s at 20 °C and more preferably 2 mPa·s to 20 mPa·s. The viscosity can be measured using a rheometer, MCR-300, available from Physica in such a manner that the shear rate is increased from 10 s⁻¹ to 1,000 s⁻¹ in a 20 °C environment and the viscosity at a shear rate of 200 s⁻¹ is read.

### 1.7. Applications

The oily ink composition for ink jet recording is stored in an ink cartridge of a known ink jet recording apparatus and droplets of the ink are ejected so as to be applied to a recording medium such as paper, whereby an image is recorded. The ink jet recording apparatus is preferably one that includes a piezoelectric element capable of vibrating on the basis of an electrical signal and that is configured to be capable of ejecting the ink by the vibration of the piezoelectric element.

Examples of a process for ejecting the oily ink composition for ink jet recording from a nozzle include a process in which droplets of ink are continuously ejected from a nozzle by applying a strong electric field between the nozzle and an acceleration electrode placed in front of the nozzle such that the ink droplets respond to a recording information signal while the ink droplets are travelling between polarization electrodes (an electrostatic attraction process), a process in which droplets of ink are forcedly ejected in such a manner that a pressure is applied to the ink with a compact pump and a nozzle is mechanically vibrated with a quartz oscillator or the like, a process in which droplets of ink are ejected and recorded in such a manner that a pressure and a recording information signal are applied to the ink at the same time (a piezoelectric process), and a process in which droplets of ink are ejected and recorded in such a manner that the ink is heated with a micro-electrode in response to a recording information signal so as to bubble (a thermal jet process).

An ink jet head used may be any of a line-type ink jet head and a serial-type ink jet head. The oily ink composition for ink jet recording can maintain the printing density in an initial period of printing; can suppress the strike-through of ink; and therefore exhibits a high effect in high-speed printing, duplex printing, and the like using an ink jet recording apparatus including the line-type ink jet head.

In this embodiment, a recording medium serving as a recording target is not particularly limited and any types of recording media such as plain paper, coated paper, plastic films, fabrics, and leathers can be used. The recording medium may be a low ink-absorbing or ink non-absorbing recording medium. The oily ink composition for ink jet recording is particularly suitable for printing on ink-absorbing (permeable) recording media such as plain paper, can maintain the printing density in an initial period of printing, can suppress the strike-through of ink, can reduce the amounts of generated VOCs, and enables both high image quality and high-speed recording.

The term "low ink-absorbing or ink non-absorbing recording medium", as used herein, refers to a recording medium having the property of absorbing very little of an ink composition or the property of not at all absorbing the ink composition. Quantitatively, the term "low ink-absorbing or ink non-absorbing recording medium" refers to a recording medium that absorbs 10 mL/m² or less of water for a contact time of 30 msec as determined by a Bristow method. The Bristow method is the most popular method for measuring the amount of absorbed liquid in a short time and has been adopted by Japan Technical Association of the Pulp and Paper Industry (JAPAN TAPPI). Details of the Bristow method are described in Standard No. 51 "Kami Oyobi Itagami-Ekitai Kyushusei Siken Houhou-Buristo Hou (Paper and paperboard-liquid absorption test method-Bristow method)" in "JAPAN TAPPI Pulp and Paper Test Methods, 2000". The term "ink-absorbing recording medium" refers to a recording medium that does not correspond to the low ink-absorbing or ink non-absorbing recording medium.

Examples of the ink non-absorbing recording medium include plastic films having no ink absorption layer, media having a plastic coating on a substrate such as paper, and media having a bonded plastic film. The term "plastic", as used herein, includes polyvinyl chloride, polyethylene terephthalate, polycarbonate, polystyrene, polyurethane, polyethylene, and polypropylene.

Examples of the low ink-absorbing recording medium include recording media provided with a surface coating layer for accepting ink; recording media provided with a substrate made of paper such as printing paper including art paper, coated paper, and matte paper; recording medium provided with a substrate that is a plastic film include those in which the surface of polyvinyl chloride, polyethylene terephthalate, polycarbonate, polystyrene, polyurethane, polyethylene, or polypropylene is coated with a hydrophilic polymer and those in which the surface thereof is coated with particles of silica, titanium, or the like and a binder. These recording media may be transparent.

### 2. Examples

The invention is further described below in detail with reference to examples and comparative examples. The invention is not, in any way, limited to the examples.

### 2.1. Preparation of oily ink compositions for ink jet recording

Oily ink compositions for ink jet recording were prepared so as to have a composition (mass percent) shown in the Table below.

### Example 1

Into a 20 L stainless steel vessel, 5,000 g of Ether 1, 2,000 g of IOP, 2,000 g of RISONOL 16SP, 600 g of a pigment, and 300 g of a dispersant were put, followed by stirring for 1 hour using Dissolver available from Inoue Mfg., Inc., whereby a mill base was prepared. The obtained mill base was treated by five-path dispersion in a path operation using STARMILL LMZ (a peripheral speed of 12 m/s, zirconia beads with a diameter of 0.1 mm, and a bead filling factor of 85%) available from Ashizawa Finetech, Ltd. Thereafter, the mill base was centrifuged at an acceleration of 11,000 G for 20 minutes using a cooling centrifuge, CR7N, available from Hitachi Koki Co., Ltd., followed by filtration using a 3 µm filter. To the filtrate, 100 g of an iron complex solution was added, followed by sufficient stirring, whereby an oily ink composition for ink jet recording was prepared in Example 1.

### Examples 2 to 8 and Comparative Examples 1 and 2

Oily ink compositions for ink jet recording were prepared in Examples 2 to 8 and Comparative Examples 1 and 2 in substantially the same manner as that used in Example 1 except that Ethers 2 to 10 were used instead of Ether 1.

### Example 9

Into a 20 L stainless steel vessel, 5,300 g of Ether 1, 2,000 g of RISONOL 16SP, and 600 g of an oil-soluble dye were put, followed by stirring for 1 hour using Dissolver available from Inoue Mfg., Inc. and filtration using a 3 µm filter. To the filtrate, 100 g of an iron complex solution was added, followed by sufficient stirring, whereby an oily ink composition for ink jet recording was prepared in Example 9.

### Example 10

An oily ink composition for ink jet recording was prepared in Example 10 in substantially the same manner as that used in Example 1 except that Ether 1 was used instead of the iron complex solution used in Example 1.

### Examples 11 and 12

Oily ink compositions for ink jet recording were prepared in Examples 11 to 12 in substantially the same manner as that used in Example 1 except that the amounts of Ether 1 and IOP used were changed as shown in the Table.

**Table**

| | Example 1 | Example 2 | Example 3 | Example 4 | Example 5 | Example 6 | Example 7 | Example 8 | Example 9 | Example 10 | Example 11 | Example 12 | Comparative Example 1 | Comparative Example 2 |
|---|---|---|---|---|---|---|---|---|---|---|---|---|---|---|
| Pigment | 6 | 6 | 6 | 6 | 6 | 6 | 6 | 6 | - | 6 | 6 | 6 | 6 | 6 |
| Oil-soluble dye | - | - | - | - | - | - | - | - | 6 | - | - | - | | |
| Dispersant | 3 | 3 | 3 | 3 | 3 | 3 | 3 | 3 | - | 3 | 3 | 3 | 3 | 3 |
| Ether 1 | 50 | - | - | - | - | - | - | - | 53 | 51 | 35 | 25 | - | - |
| Ether 2 | - | 50 | - | - | - | - | - | - | - | - | - | - | - | - |
| Ether 3 | - | - | 50 | - | - | - | - | - | - | - | - | - | - | - |
| Ether 4 | - | - | - | 50 | - | - | - | - | - | - | - | - | - | - |
| Ether 5 | - | - | - | - | 50 | - | - | - | - | - | - | - | - | - |
| Ether 6 | - | - | - | - | - | 50 | - | - | - | - | - | - | - | - |
| Ether 7 | - | - | - | - | - | - | 50 | - | - | - | - | - | - | - |
| Ether 8 | - | - | - | - | - | - | - | 50 | - | - | - | - | - | - |
| Ether 9 | - | - | - | - | - | - | - | - | - | - | - | - | 50 | - |
| Ether 10 | - | - | - | - | - | - | - | - | - | - | - | - | - | 50 |
| IOP | 20 | 20 | 20 | 20 | 20 | 20 | 20 | 20 | 20 | 20 | 35 | 45 | 20 | 20 |
| RISONOL 16SP | 20 | 20 | 20 | 20 | 20 | 20 | 20 | 20 | 20 | 20 | 20 | 20 | 20 | 20 |
| Iron complex solution | 1 | 1 | 1 | 1 | 1 | 1 | 1 | 1 | 1 | 0 | 1 | 1 | 1 | 1 |
| Color developability | 5 | 5 | 5 | 4 | 4 | 4 | 5 | 5 | 5 | 4 | 3 | 2 | 1 | 1 |
| Strike-through | 5 | 5 | 5 | 4 | 4 | 4 | 5 | 5 | 4 | 3 | 3 | 3 | 1 | 1 |
| Odor | 3 | 3 | 3 | 3 | 3 | 3 | 2 | 2 | 3 | 3 | 3 | 3 | 3 | 3 |

Details of materials shown in the Table are as described below.
- Pigment: Carbon Black #2600 available from Mitsubishi Chemical Corporation
- Oil-soluble dye: OIL BLACK 860 available from Orient Chemical Industries Co., Ltd.
- Dispersant: Solsperse 13940 available from Japan Lubrizol Corporation
- Ether 1: triethylene glycol diallyl ether
   (the boiling point of triethylene glycol: 285 °C)
- Ether 2: diethylene glycol diallyl ether
   (the boiling point of diethylene glycol: 244 °C)
- Ether 3: tetraethylene glycol diallyl ether
   (the boiling point of tetraethylene glycol: 328 °C)
- Ether 4: triethylene glycol allyl methyl ether
   (the boiling point of triethylene glycol: 285 °C)
- Ether 5: diethylene glycol allyl butyl ether
   (the boiling point of diethylene glycol: 244 °C)
- Ether 6: tetraethylene glycol monoallyl ether
   (the boiling point of tetraethylene glycol: 328 °C)
- Ether 7: ethylene glycol diallyl ether
   (the boiling point of ethylene glycol: 198 °C)
- Ether 8: dipropylene glycol diallyl ether
   (the boiling point of dipropylene glycol: 232 °C)
- Ether 9: triethylene glycol butyl methyl ether
- Ether 10: diethylene glycol dibutyl ether
- IOP: isooctyl palmitate available from Kokyu Alcohol Kogyo Co., Ltd.
- RISONOL 16SP: hexyldecanol available from Kokyu Alcohol Kogyo Co., Ltd.
- Iron complex: Borchi^{®} OXY-COAT 1410 available from Borchers

### 2.2. Evaluation tests

### 2.2.1. Color developability evaluation test

Each of the oily ink compositions for ink jet recording was filled in an ink cartridge of an ink jet printer, PX-7050F, available from Seiko Epson Corporation. A solid image (100% duty) was printed over plain paper, P Paper A4, available from Fuji Xerox Co., Ltd. using the ink jet printer and was evaluated in accordance with standards below.

### Evaluation standards

5: an optical density (OD) of 1.2 or more
4: an OD of 1.1 to less than 1.2
3: an OD of 1.0 to less than 1.1
2: an OD of 0.9 to less than 1.0
1: an OD of less than 0.9

### 2.2.2. Strike-through evaluation test

The back surface of each print obtained in the color developability evaluation test was evaluated in accordance with standards below.

### Evaluation standards

5: a back surface OD of less than 0.25
4: a back surface OD of 0.25 to less than 0.30
3: a back surface OD of 0.30 to less than 0.40
2: a back surface OD of 0.40 to less than 0.50
1: a back surface OD of 0.50 or more

### 2.2.3. Odor evaluation test

In order to evaluate the amounts of generated VOCs, an odor of a solid printed surface of each print obtained in the color developability evaluation test was sensorially evaluated in accordance with standards below immediately after printing.

### Evaluation standards

3: substantially no odor
2: slight odor
1: obvious odor

### 2.3. Evaluation results

Evaluation results of Examples 1 to 12 and Comparative Examples 1 and 2 are shown in the Table. Examples 1 to 12, in which an oily medium contained an allyl ether represented by Formula (1), resulted in that an odor was suppressed, the OD was high in the color developability evaluation test, and the back surface OD was low in the strike-through evaluation test. Results of the color developability evaluation test showed that both the pigment and the dye were high. In comparison between results of Examples 1 and 10, Example 1, in which the iron complex solution was added, exhibited higher OD. In comparison between results of Examples 1, 11, and 12, a higher allyl ether content exhibited higher OD. In the strike-through evaluation test, a similar tendency was exhibited and the addition of the iron complex solution and a higher allyl ether content obtained higher evaluation scores. Furthermore, an alkylene glycol, having a boiling point of 240 °C or more, for forming an allyl ether used and a diallyl ether exhibited higher scores in the three evaluation tests. However, in Comparative Examples 1 and 2, though each print had substantially no odor, ink reached the back surface thereof and results of both the color developability evaluation test and the strike-through evaluation test were low.

As described above, an oily ink composition for ink jet recording according to the invention contains an oily medium and a colorant and the oily medium contains an allyl ether represented by Formula (1). Therefore, the oily ink composition for ink jet recording can reduce the amounts of generated VOCs in printing on permeable recording media, can maintain the printing density in an initial period of printing, can suppress the reduction in color developability of prints and the increase of strike-through, and enables both high image quality and high-speed recording.

## Claims

1. An oily ink composition for ink jet recording containing: an oily
medium; and
a colorant,
wherein the oily medium contains an aliphatic alcohol containing 12 or more carbon atoms in one molecule and an allyl ether selected from triethylene glycol allyl methyl ether and diethylene glycol allyl butyl ether or represented by the following formula: 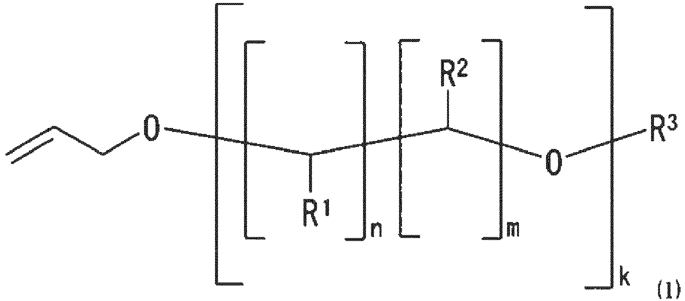 where R¹ and R² independently represent a hydrogen atom or a methyl group, R³ represents a hydrogen atom or an allyl group, k represents an integer of 1 to 4, and m and n each represent an integer satisfying the inequality m + n ≤ 3.

2. The oily ink composition for ink jet recording according to Claim 1, wherein the content of the allyl ether in the oily medium is 30% by mass or more.

3. The oily ink composition for ink jet recording according to Claim 1 or Claim 2, wherein the boiling point of an alkylene glycol for forming the allyl ether is 240 °C or more.

4. The oily ink composition for inkjet recording according to Claim 3, wherein the alkylene glycol includes at least one selected from the group consisting of diethylene glycol, triethylene glycol, and tetraethylene glycol.

5. The oily ink composition for ink jet recording according to any one of the preceding claims, wherein the allyl ether is a diallyl ether.

6. The oily ink composition for ink jet recording according to any one of the preceding claims, wherein the colorant is a pigment.

7. The oily ink composition for ink jet recording according to any one of the preceding claims, further containing at least one of a metal complex and a fatty acid metal salt.

8. The oily ink composition for ink jet recording according to any one of the preceding claims, wherein the oily medium contains an allyl ether represented by formula (1).

## Patentansprüche

1. Ölige Tintenzusammensetzung zur Tintenstrahlaufzeichnung, enthaltend; ein öliges
Medium; und
einen Farbstoff,
wobei das ölige Medium einen aliphatischen Alkohol, der 12 oder mehr Kohlenstoffatome in einem Molekül enthält, und einen Allylether, ausgewählt aus Triethylenglykolallylmethylether und Diethylenglykolallylbutylether oder dargestellt durch die folgende Formel enthält: 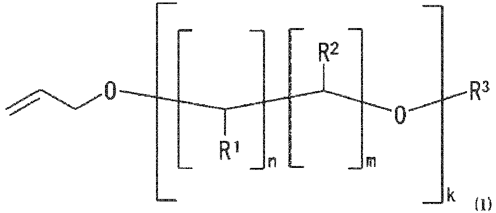
wobei R¹ und R² unabhängig ein Wasserstoffatom oder eine Methylgruppe darstellen, R³ ein Wasserstoffatom oder eine Allylgruppe darstellt, k eine ganze Zahl von 1 bis 4 darstellt und m und n jeweils eine ganze Zahl darstellen, die die Ungleichung m + n ≤ 3 erfüllt.

2. Ölige Tintenzusammensetzung zur Tintenstrahlaufzeichnung nach Anspruch 1, wobei der Gehalt des Allylethers in dem öligen Medium 30 Masseprozent oder mehr ist.

3. Ölige Tintenzusammensetzung zur Tintenstrahlaufzeichnung nach Anspruch 1 oder Anspruch 2, wobei der Siedepunkt eines Alkylenglykols zum Bilden des Allylethers 240°C oder mehr ist.

4. Ölige Tintenzusammensetzung zur Tintenstrahlaufzeichnung nach Anspruch 3, wobei das Alkylenglykol mindestens eines ausgewählt aus der Gruppe bestehend aus Diethylenglykol, Triethylenglykol und Tetraethylenglykol umfasst.

5. Ölige Tintenzusammensetzung zur Tintenstrahlaufzeichnung nach einem der vorstehenden Ansprüche, wobei der Allylether Diallylether ist.

6. Ölige Tintenzusammensetzung zur Tintenstrahlaufzeichnung nach einem der vorstehenden Ansprüche, wobei der Farbstoff ein Pigment ist.

7. Ölige Tintenzusammensetzung zur Tintenstrahlaufzeichnung nach einem der vorstehenden Ansprüche, weiter enthaltend mindestens eines von einem Metallkomplex und einem Fettsäuremetallsalz.

8. Ölige Tintenzusammensetzung zur Tintenstrahlaufzeichnung nach einem der vorstehenden Ansprüche, wobei das ölige Medium einen Allylether, dargestellt durch Formel (1) enthält.

## Revendications

1. Composition d'encre huileuse pour l'enregistrement par jet d'encre contenant : un milieu huileux ; et
un colorant,
dans laquelle le milieu huileux contient un alcool aliphatique contenant 12 ou davantage d'atomes de carbone dans une molécule et un éther allylique sélectionné parmi un éther allylique méthylique de triéthylène glycol et un éther allylique butylique de diéthylène glycol ou représenté par la formule suivante : 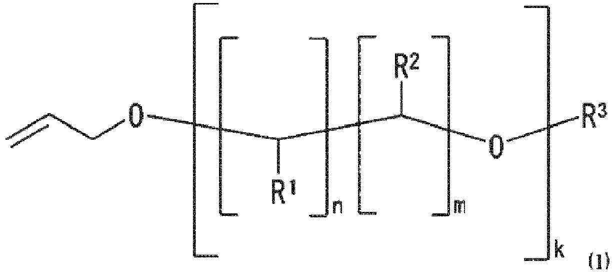
où R¹ et R² représentent indépendamment un atome d'hydrogène ou un groupe méthyle, R³ représente un atome d'hydrogène ou un groupe allyle, k représente en nombre entier de 1 à 14, et m et n représentent chacun un nombre entier satisfaisant à l'inégalité m + n ≤ 3.

2. Composition d'encre huileuse pour l'enregistrement par jet d'encre selon la revendication 1, dans laquelle la teneur d'éther allylique dans le milieu huileux est de 30% en masse ou plus.

3. Composition d'encre huileuse pour l'enregistrement par jet d'encre selon la revendication 1 ou la revendication 2, dans laquelle le point d'ébullition d'un alkylène glycol pour former l'éther allylique est de 240°C ou plus.

4. Composition d'encre huileuse pour l'enregistrement par jet d'encre selon la revendication 3, dans laquelle l'alkylène glycol comprend au moins l'un sélectionné dans le groupe formé par du diéthylène glycol, du triéthylène glycol, et du tétraéthylène glycol.

5. Composition d'encre huileuse pour l'enregistrement par jet d'encre selon l'une quelconque des revendications précédentes, dans laquelle l'éther allylique est un éther diallylique.

6. Composition d'encre huileuse pour l'enregistrement par jet d'encre selon l'une quelconque des revendications précédentes, dans laquelle le colorant est un pigment.

7. Composition d'encre huileuse pour l'enregistrement par jet d'encre selon l'une quelconque des revendications précédentes, comprenant en outre au moins l'un parmi un complexe métallique et un sel métallique d'acide gras.

8. Composition d'encre huileuse pour l'enregistrement par jet d'encre selon l'une quelconque des revendications précédentes, dans laquelle le milieu huileux contient un éther allylique représenté par la formule (1).
